# EUROPÄISCHE PATENTSCHRIFT

(11) **EP 3 069 932 B1**
(45) Veröffentlichungstag und Bekanntmachung des Hinweises auf die Patenterteilung: **24.03.2021**
(21) Anmeldenummer: 16155618.8
(22) Anmeldetag: 15.02.2016
(51) Int. Cl.: B60Q 1/076, B60Q 1/00

(54) **FAHRZEUGSCHEINWERFER, INSBESONDERE KRAFTFAHRZEUGSCHEINWERFER, MIT EINEM GEHÄUSE**
VEHICLE HEADLIGHT, IN PARTICULAR MOTOR VEHICLE HEADLIGHT, WITH A HOUSING
PHARE DE VEHICULE, EN PARTICULIER PHARE DE VEHICULE AUTOMOBILE, DOTE D'UN BOITIER

(30) Priorität: 17.03.2015 AT 502132015
(43) Veröffentlichungstag der Anmeldung: 21.09.2016
(73) Patentinhaber: ZKW Group GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- DE-A1- 1 911 545
- DE-A1- 19 646 282
- DE-U1-202004 019 043
- DE-U1-202011 003 404
- GB-A- 2 239 513
- US-A- 3 416 119
- US-A- 4 357 591
- US-A1- 2007 201 218

## Beschreibung

Die Erfindung betrifft einen Fahrzeugscheinwerfer, insbesondere einen Kraftfahrzeugscheinwerfer, mit einem Gehäuse und einem in dem Gehäuse aufgenommenen Einstellelement sowie einer zur Erfassung der Position und/oder Orientierung des Einstellelements eingerichteten Messvorrichtung, wobei das Einstellelement sowie die Messvorrichtung mit dem Fahrzeugscheinwerfergehäuse verbunden sind, wobei die Messvorrichtung dazu eingerichtet ist, ein von der Position und/oder Orientierung des Einstellelements abhängiges elektrisches Signal zur Ansteuerung einer Einstellvorrichtung zur Einstellung eines optisch relevanten Bauteils eines Fahrzeugscheinwerfers abzugeben, wobei das Einstellelement über ein Übersetzungsgetriebe mit der Messvorrichtung verbunden ist, wobei das Übersetzungsgetriebe dazu eingerichtet ist, eine Drehbewegung des Einstellelements auf die Messvorrichtung zu übertragen.

Aus dem Stand der Technik bekannte Fahrzeugscheinwerfer weisen häufig manuell bedienbare Stellmittel auf, die mit elektromotorischen Stellmitteln zusammen wirken, um einen optisch relevanten Bauteil in seiner Position und/oder Orientierung zu verändern. Ein solcher Fahrzeugscheinwerfer ist beispielsweise aus dem Patentdokument AT 513 918 A1 bekannt geworden. Dabei ist das manuell bedienbare Stellmittel in dem Fahrzeugscheinwerfergehäuse untergebracht und weist mechanische Kopplungselemente auf, mit der eine Bewegung eines Einstellelements auf eine Antriebswelle übertragen wird, die zur Verschiebung von Lagerpunkten des optisch relevanten Bauteils eingerichtet ist und es damit ermöglicht, eine Grundeinstellung vorzunehmen. Um zusätzlich eine automatische Verstellung des optisch relevanten Bauteils zu erlauben, ist der Scheinwerfer gemäß der AT 513 918 A1 zusätzlich mit elektromotorischen Stellmitteln ausgestattet. Dokumente DE 202011003404U1, US 2007/0201218A1 und GB 2239513A betreffen jeweils Scheinwerfer mit einer Verstellmechanik.

Dabei ist es von Nachteil, dass die Verstellmechanik zur Grundeinstellung des optisch relevanten Bauteils kostenintensiv hergestellt und verbaut werden muss und zudem Platz benötigt, wodurch die Abmessungen von solcherart beschaffenen Scheinwerfern nur eingeschränkt frei gewählt werden können.

Es ist daher eine Aufgabe der Erfindung, einen Fahrzeugscheinwerfer zu schaffen, welcher die genannten Nachteile des Standes der Technik beseitigt und einen robusten, kostengünstigen, kompakten und effizienten Aufbau eines Fahrzeugscheinwerfers ermöglicht, welcher dazu geeignet ist, dass ein darin zumindest teilweise aufgenommenes optisch relevantes Bauteil eingestellt werden kann.

Diese Aufgabe wird mit einem Fahrzeugscheinwerfer gemäß Anspruch 1 gelöst. Bei dem elektrischen Signal kann es um ein Digitalals auch ein Analogsignal handeln. Die Abgabe eines elektrischen Signals durch die Messvorrichtung erlaubt es, dass dieses Signal beispielsweise einem nachgeschalteten elektromotorischen Stellmittel direkt oder indirekt über eine Steuerelektronik zugeführt werden kann, wodurch auf das Vorsehen von rein mechanischen Stellmitteln verzichtet werden kann und damit bereits mit den elektromotorischen Stellmitteln sämtliche gewünschte Einstellfunktionen erfüllt werden können. Eine indirekte Signalleitung bietet dabei den Vorteil, dass das Signal mit Standardelektronik, die nicht an das jeweilige Stellmittel angepasst sein muss, erzeugt werden kann. Außerdem ist die Erfassung der Position und/oder Orientierung des Einstellelements durch eine Messvorrichtung der eingangs genannten Art besonders effizient und kostengünstig und aufgrund der geringen Baugröße gut in einem Gehäuse aufnehmbar.

Das Gehäuse ist typischerweise ein einziges Bauteil und kann im Prinzip ein beliebiges Gehäuse sein, welches dazu geeignet ist, die entsprechenden Komponenten, sprich das Einstellelement usw., aufzunehmen. Insbesondere kann das Gehäuse ein Kraftfahrzeugscheinwerfergehäuse sein. Das Gehäuse kann aus einem einzigen oder auch aus mehreren Bauteilen und/oder Abschnitten zusammengesetzt sein.

Insbesondere kann es vorgesehen sein, dass die Messvorrichtung ein Winkellagegeber ist. Winkellagegeber sind zur Erfassung des Winkels eines Referenzelements zu einer Bezugsachse eingerichtet. In der vorliegenden Erfindung kann das Einstellelement derart mit dem Referenzelement gekoppelt sein, dass das Referenzelement mit Hilfe des Einstellelements gedreht werden kann.

Bevorzugt handelt es sich bei dem Winkellagegeber um einen Drehgeber, sprich, die Messvorrichtung kann ein Drehgeber sein. Drehgeber verfügen über einen Sensor zur Erfassung einer Drehbewegung/-position und sind üblicherweise dazu eingerichtet, zumindest ein dazu korrespondierendes digitales Ausgangssignal abzugeben.

Besonders günstig kann es dabei sein, wenn der Drehgeber ein Inkrementalgeber oder ein Absolutwertgeber ist. Bei Inkrementalgebern wird die Orientierung/Position eines Referenzelements inkrementell berechnet, wohingegen Absolutwertgeber dazu eingerichtet sind, die Orientierung/Position des Referenzelements unabhängig von der vorangegangenen Position zu berechnen. Hierfür greifen Absolutwertgeber auf eindeutige Kodiermuster zurück, wobei jeder Orientierung/Position genau ein Muster zugeordnet ist.

Alternativ dazu kann es vorgesehen sein, dass die Messvorrichtung ein Potentiometergeber ist. Potentiometergeber sind besonders günstig und robust und daher für den Einsatz in Fahrzeugscheinwerfern besonders geeignet.

Insbesondere kann es vorgesehen sein, dass die Messvorrichtung ein Referenzelement aufweist, das dazu eingerichtet ist, um zumindest 360°, vorzugsweise zumindest 720°, verdreht zu werden. Damit kann eine besonders genaue und fein dosierbare Erfassung der Position und/oder Orientierung des Einstellelements erfolgen.

Besonders günstig kann es sein, wenn das Einstellelement drehbar an dem Fahrzeugscheinwerfergehäuse gelagert ist.

Zudem kann es vorgesehen sein, dass das Einstellelement dazu eingerichtet ist, um zumindest 360°, vorzugsweise zumindest 720°, verdreht zu werden. Damit kann eine besonders hohe Auflösung des durch die Messvorrichtung abgegebenen Signals erzielt werden.

Um dem Eintritt von unerwünschten Substanzen wie beispielsweise Staub oder Wasser in einen Innenbereich des Gehäuses vorzubeugen, kann bei einer Variante, in der das Einstellelement das Fahrzeugscheinwerfergehäuse durchsetzt, vorgesehen sein, dass zwischen dem Fahrzeugscheinwerfergehäuse und dem Einstellelement ein Dichtungselement, insbesondere ein Dichtungsring, angeordnet ist.

Zur einfachen Einstellung des Einstellelements kann es insbesondere vorgesehen sein, dass das Einstellelement drehbar an dem Fahrzeugscheinwerfergehäuse gelagert ist und eine koaxial angeordnete Öffnung zur Aufnahme eines Einstellwerkzeuges aufweist. Die koaxiale Anordnung bedeutet dabei, dass die Drehachse des Drehelements durch den Mittelpunkt der Öffnung verläuft.

Um die Aufnahme eines zur Einstellung eines Fahrzeugscheinwerfers vorgesehenen Sechskantschlüssels zu ermöglichen, kann es vorgesehen sein, dass die Öffnung eine sechseckige Form aufweist.

Außerdem kann die Öffnung eine schlitz- und/oder eine kreuzförmige Einkerbung in dem Einstellelement ausbilden. Damit können auch Schlitz- oder Kreuzschraubendreher zur Ausrichtung, insbesondere zum Verdrehen des Einstellelements herangezogen werden.

Erfindungsgemäß ist das Einstellelement über ein Übersetzungsgetriebe mit der Messvorrichtung verbunden, wobei das Übersetzungsgetriebe dazu eingerichtet ist, eine Drehbewegung des Einstellelements auf die Messvorrichtung zu übertragen.

Erfindungsgemäß weist das Einstellelement einen verzahnten Abschnitt einer Welle auf, welcher mit einem Zahnrad des Übersetzungsgetriebes zur Drehung des Zahnrades im Eingriff steht, wobei das Zahnrad eine Ausnehmung aufweist, die die ansonsten gleichmäßige Verzahnung entlang des Umfangs des Zahnrades unterbricht. Damit kann in einfacher Weise verhindert werden, dass die Messvorrichtung, insbesondere ein Referenzelement der Messvorrichtung, über einen vorgesehen Bereich hinaus gedreht wird. Diese Ausnehmung setzt keine bestimmte Übersetzung des Übersetzungsgetriebes voraus, insbesondere eine Übersetzung ungleich 1:1. Es kann beispielsweise vorgesehen sein, dass das Übersetzungsgetriebe ein beliebiges Übersetzungsverhältnis zwischen beispielsweise 12:1 und 1:12 aufweist.

Dabei kann es besonders günstig sein, wenn die Ausnehmung eine Erstreckung zwischen 5% und 50%, vorzugsweise zwischen 20% und 30% des Umfangs des Zahnrades aufweist.

Wird der verzahnte Abschnitt der Welle des Einstellelements soweit gedreht, dass ein weiteres Drehen des Zahnrades durch ein Erreichen der Ausnehmung unterbrochen wird, so kann es unter Umständen vorkommen, dass ein Zurückdrehen des Zahnrades mittels dem Einstellelement aufgrund von fehlendem mechanischem Zusammenspiel nicht möglich ist.

Zur Vermeidung dieses Problems ist es erfindungsgemäß vorgesehen, dass das Zahnrad im Bereich der Ausnehmung ein federndes Element aufweist, wobei die Messvorrichtung ein Halteelement zur Aufnahme des Zahnrades aufweist und das Halteelement ferner ein Begrenzungselement umfasst, wobei das Begrenzungselement und das elastische Element dergestalt angeordnet sind, dass in einer Position, in der der verzahnte Abschnitt der Welle in die Ausnehmung gedreht wird und das Zahnrad somit eine Eingriffsposition verlässt, das federnde Element gegen das Begrenzungselement gedrückt wird, sodass das federnde Element eine rückstellende Kraft auf das Zahnrad ausübt, die das Zahnrad zurück in die Eingriffsposition drückt.

Das federnde Element sowie das Halteelement bestehen dabei vorzugsweise aus Kunststoff, das Zahnrad und die Welle bzw. der verzahnte Abschnitt der Welle vorzugsweise aus Metall. Diese Materialpaarung ist besonders vorteilhaft.

Bevorzugt ist das Gehäuse ein Fahrzeugscheinwerfergehäuse. Damit kann das Einstellelement besonders einfach in einem Fahrzeugscheinwerfer aufgenommen werden.

Alternativ dazu kann das Gehäuse auch ein von dem Fahrzeugscheinwerfer gesondertes, d.h. getrennt angeordnetes, Gehäuse sein. Ein solches gesondertes Gehäuse kann eigenständig gestaltet werden und außerhalb oder innerhalb des Fahrzeugscheinwerfergehäuses oder das Fahrzeugscheinwerfergehäuse durchsetzend angeordnet sein.

Die Erfindung ist im Folgenden an Hand mehrerer beispielhafter und nicht einschränkender Ausführungsformen näher erläutert, die in den Figuren veranschaulicht sind. Darin zeigt
Figur 1 eine Darstellung eines Fahrzeugscheinwerfergehäuse mit zwei darin aufgenommenen Einstellelementen von oben,
Figur 2 eine Schnittdarstellung des Fahrzeugscheinwerfergehäuses mit darin verbauten Komponenten in einer Seitenansicht,
Figur 3 eine perspektivische Darstellung einer Messvorrichtung mit dem Einstellelement,
Figur 4 eine Explosionsdarstellung der Messvorrichtung gemäß der Figur 3,
Figur 5 eine Draufsicht auf die Messvorrichtung mit dem Einstellelement gemäß den Figuren 3 und 4,
Figur 6 eine perspektivische Darstellung einer Ausführungsform einer Messvorrichtung mit einem daran gekoppelten Einstellelement, und
Figur 7 eine perspektivische Explosionsdarstellung der Messvorrichtung gemäß Figur 6.

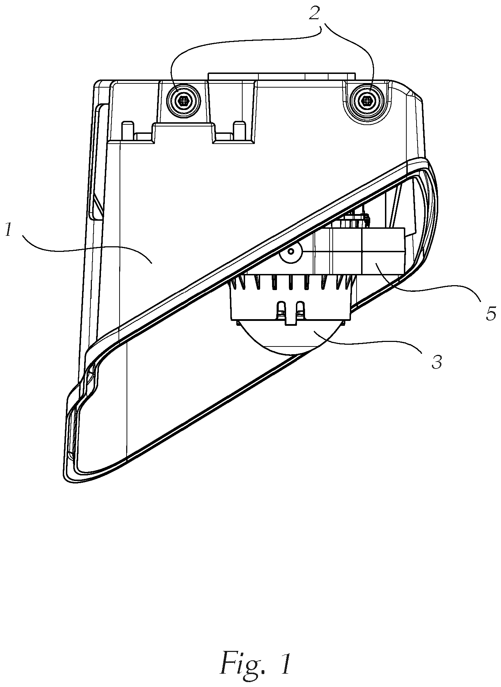

Figur 1 zeigt ein Gehäuse 1, welches als Fahrzeugscheinwerfergehäuse 1 ausgebildet ist, wobei in dem Fahrzeugscheinwerfergehäuse 1 zwei Einstellelemente 2 aufgenommen sind. Des Weiteren ist ein optisch relevanter Bauteil 3 erkennbar, der zumindest teilweise in dem Fahrzeugscheinwerfergehäuse 1 aufgenommen ist. Als optisch relevante Bauteile 3 werden insbesondere Blenden(anordnungen), Lichtquellen, insbesondere LED und/oder Laserlichtquellen, Reflektoren, Linsen und/oder ganze Lichtmodule bzw. Baugruppen, etc. angesehen. Es können daher einzelne oder eine Mehrzahl dieser genannten Komponenten den optisch relevanten Bauteil 3 ausbilden.

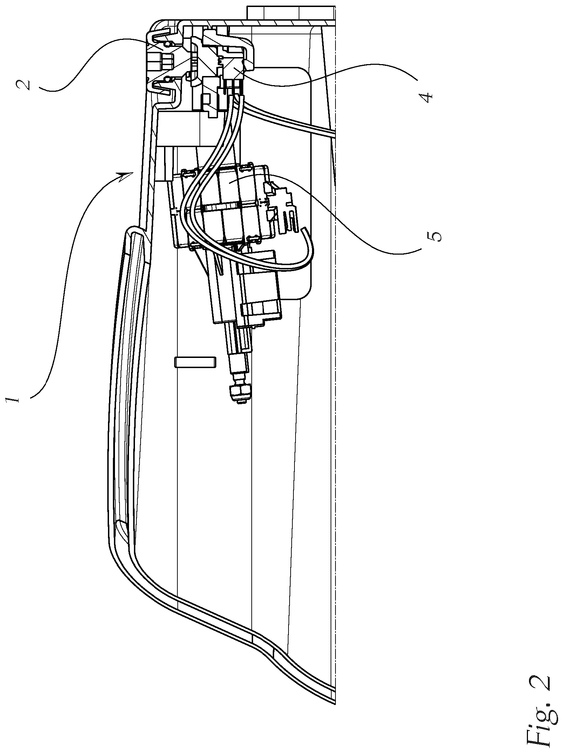

Außerdem ist das Fahrzeugscheinwerfergehäuse 1 mit einer Messvorrichtung 4 verbunden, die in den nachfolgenden Figuren dargestellt und später näher diskutiert wird. Die Messvorrichtung 4 ist dazu eingerichtet, die Position und/oder Orientierung des Einstellelements 2 zu überwachen bzw. zu erfassen, wobei ein von der Position und/oder Orientierung des Einstellelements 2 abhängiges elektrisches Signal zur Ansteuerung einer Einstellvorrichtung 5 zur Einstellung eines optisch relevanten Bauteils 3 eines Fahrzeugscheinwerfers abgegeben wird. Eine solche Verstelleinrichtung 5 ist abschnittsweise in Figur 1 dargestellt und auch in der nachfolgend diskutierten Figur 2 gezeigt.

Figur 2 zeigt eine Schnittdarstellung des Fahrzeugscheinwerfergehäuses 1 mit einem darin aufgenommenen Einstellelement 2 sowie der Messvorrichtung 4 als auch der Einstellvorrichtung 5.

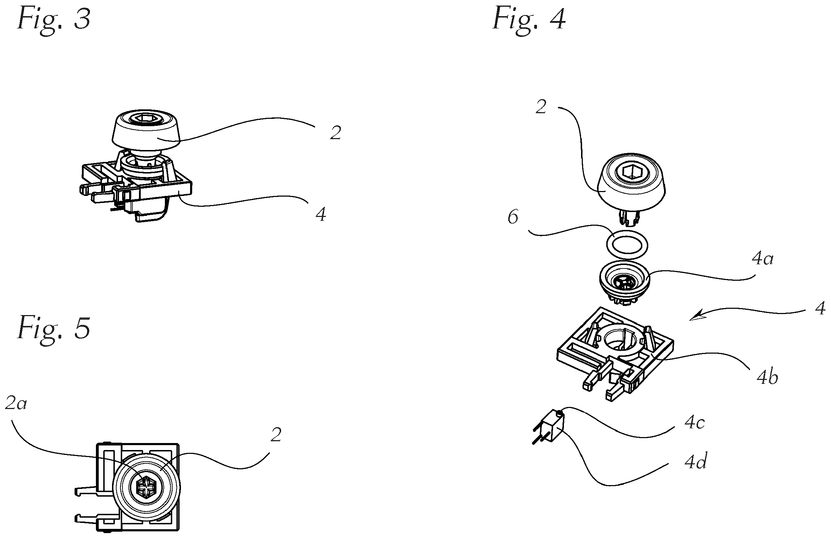

Figur 3 zeigt das Einstellelement 2 sowie die damit verbundenen Messvorrichtung 4 im zusammengebauten Zustand.

Figur 4 zeigt die Messvorrichtung 4 sowie das Einstellelement 2 der Figur 3 in einer Explosionsdarstellung. Darin ist erkennbar, dass ein Dichtungselement 6 in Form eines Dichtungsringes zwischen dem Einstellelements 2 und der Messvorrichtung 4 angeordnet ist, wobei die Messvorrichtung 4 ein zu dem Einstellelement 2 korrespondierendes Aufnahmerad 4a aufweist, das in eine entsprechende Öffnung eines Halteelements 4b eingesetzt werden kann, um auf das Referenzelement 4c eines Sensors 4d einzugreifen. Nach Einbau der Messvorrichtung 4 und des Einstellelements 2 in das Fahrzeugscheinwerfergehäuse 1 befindet sich das Aufnahmerad 4a auf einer Innenseite des Gehäuses 1, wobei das Einstellelement 2 das Gehäuse 1 durchsetzt.

Figur 5 zeigt eine Draufsicht auf die Messvorrichtung 4 sowie das Einstellelement 2 gemäß den Figuren 3 bis 4. Darin ist erkennbar, dass das Einstellelement 2 eine koaxial zur Drehachse des Einstellelements 2 angeordnete Öffnung 2a aufweist, die zur Aufnahme eines Einstellwerkzeuges eingerichtet ist. Die Öffnung 2a weißt im vorliegenden Beispiel eine sechseckige Form auf und verfügt zudem über schlitz- und kreuzförmige Vertiefungen, wodurch Einkerbungen in dem Einstellelement 2 ausgebildet werden. Das Einstellelement 2 ist dabei direkt mit der Messvorrichtung 4, insbesondere dem Referenzelement 4c des Sensors 4d verbunden.

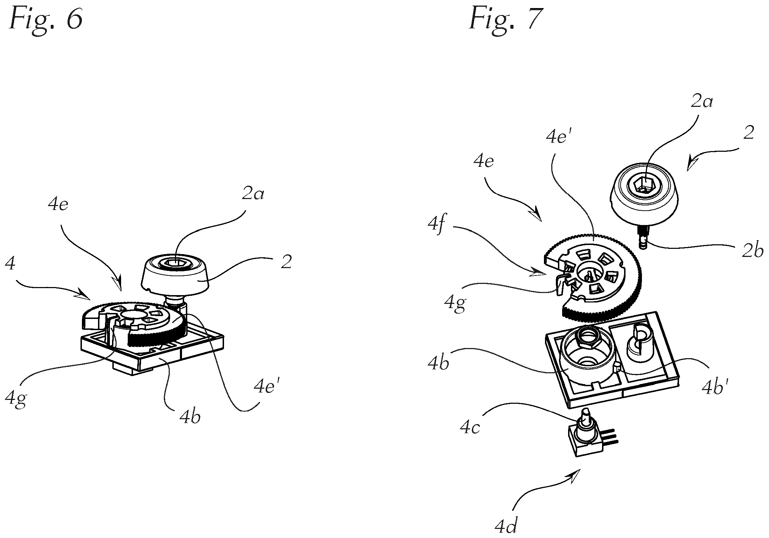

Figur 6 zeigt eine perspektivische Darstellung einer Ausführungsform einer Messvorrichtung 4 mit einem damit verbundenen Einstellelement 2. Darin weißt die Messvorrichtung 4 ein Übersetzungsgetriebe 4e auf, mit der eine Drehbewegung des Einstellelements 2 auf den Sensor 4d übertragen werden kann. Das Übersetzungsgetriebe 4e ist so ausgelegt, dass eine Übersetzung der Drehbewegung des Einstellelements 2 im Verhältnis von zumindest 4:1 auf das Referenzelements 4c des Sensors 4d.

Hierfür weißt das Übersetzungsgetriebe 4e ein Zahnrad 4e' auf, welches mit einem verzahnten Abschnitt einer Welle 2b des Einstellelements 2 in Eingriff steht.

Das Zahnrad 4e' weist eine Ausnehmung 4f auf, die die ansonsten gleichmäßig Verzahnung entlang des Umfangs des Zahnrades 4e' unterbricht. Die Ausnehmung weist eine Erstreckung zwischen 5% und 50%, vorzugsweise zwischen 20% und 30% des Umfangs des Zahnrades 4e' auf.

Im Bereich der Ausnehmung 4f weist das Zahnrad 4e' ein federndes Element 4g auf, wobei die Messvorrichtung 4 ein Halteelement 4b zur Aufnahme des Zahnrades 4e'und das Halteelement 4b ferner ein Begrenzungselement 4b' umfasst, wobei das Begrenzungselement 4b' und das elastische Element 4g dergestalt angeordnet sind, dass in einer Position, in der der verzahnte Abschnitt der Welle 2b in die Ausnehmung 4f gedreht wird und das Zahnrad 4e' somit eine Eingriffsposition verlässt, das federnde Element 4g gegen das Begrenzungselement 4b' gedrückt wird, sodass das federnde Element 4g eine rückstellende Kraft auf das Zahnrad 4e' ausübt, die das Zahnrad 4e' zurück in die Eingriffsposition drückt.

Sofern nicht anders angegeben, wurden in den Figuren gleiche Vorrichtungsmerkmal mit den gleichen Bezugszeichen vergeben. In allen gezeigten Beispielen ist die Messvorrichtung 4 bzw. der Sensor 4d ein Winkellagegeber. Insbesondere sind die Messvorrichtungen Drehgeber, vorzugsweise Inkrementalgeber oder Absolutwertgeber. Alternativ dazu kann die Messvorrichtung 4 auch einen Potentiometergeber umfassen. Das Einstellelements 2 ist drehbar an dem Gehäuse 1 gelagert und durchsetzt dieses, wobei das Dichtungselement 6 zwischen dem Gehäuse 1 und dem Einstellelement 2 angeordnet ist.

In Anbetracht dieser Lehre kann die Erfindung in beliebiger dem Fachmann bekannter Weise abgeändert werden und ist daher nicht auf die gezeigten Ausführungsformen beschränkt. Auch können einzelne Aspekte der Erfindung bzw. der Ausführungsformen aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben. Die Erfindung ist nur durch die beigelegte Ansprüche beschränkt.

## Patentansprüche

1. Fahrzeugscheinwerfer, insbesondere Kraftfahrzeugscheinwerfer, mit einem Gehäuse (1) mit einem in dem Gehäuse (1) aufgenommenen Einstellelement (2) sowie einer zur Erfassung der Position und/oder Orientierung des Einstellelements (2) eingerichteten Messvorrichtung (4), wobei das Einstellelement (2) sowie die Messvorrichtung (4) mit dem Gehäuse (1) verbunden sind, wobei die Messvorrichtung (4) dazu eingerichtet ist, ein von der Position und/oder Orientierung des Einstellelements (2) abhängiges elektrisches Signal zur Ansteuerung einer Einstellvorrichtung zur Einstellung eines optisch relevanten Bauteils (3) eines Fahrzeugscheinwerfers abzugeben, wobei das Einstellelement (2) über ein Übersetzungsgetriebe (4e) mit der Messvorrichtung (4) verbunden ist, wobei das Übersetzungsgetriebe (4e) dazu eingerichtet ist, eine Drehbewegung des Einstellelements (2) auf die Messvorrichtung (4) zu übertragen, **dadurch gekennzeichnet, dass** das Einstellelement (2) einen verzahnten Abschnitt einer Welle (2b) aufweist, welcher mit einem Zahnrad (4e') des Übersetzungsgetriebes (4e) zur Drehung des Zahnrades (4e') im Eingriff steht, wobei das Zahnrad (4e') eine Ausnehmung (4f) aufweist, die die ansonsten gleichmäßige Verzahnung entlang des Umfangs des Zahnrades (4e') unterbricht, wobei das Zahnrad (4e') im Bereich der Ausnehmung (4f) ein federndes Element (4g) aufweist, wobei die Messvorrichtung (4) ein Halteelement (4b) zur Aufnahme des Zahnrades (4e') aufweist und das Halteelement (4b) ferner ein Begrenzungselement (4b') umfasst, wobei das Begrenzungselement (4b') und das elastische Element (4g) dergestalt angeordnet sind, dass in einer Position, in der der verzahnte Abschnitt der Welle (2b) in die Ausnehmung (4f) gedreht wird und das Zahnrad (4e') somit eine Eingriffsposition verlässt, das federnde Element (4g) gegen das Begrenzungselement (4b') gedrückt wird, sodass das federnde Element (4g) eine rückstellende Kraft auf das Zahnrad (4e') ausübt, die das Zahnrad (4e') zurück in die Eingriffsposition drückt.

2. Fahrzeugscheinwerfer nach Anspruch 1, **dadurch gekennzeichnet, dass** die Messvorrichtung (4) einen Winkellagegeber, einen Potentiometergeber oder einen Drehgeber, insbesondere einen Inkrementalgeber oder einen Absolutwertgeber umfasst.

3. Fahrzeugscheinwerfer nach einem der Anspruch 2, **dadurch gekennzeichnet, dass** die Messvorrichtung (4) ein Referenzelement (4c) aufweist, das dazu eingerichtet ist, um zumindest 360°, vorzugsweise zumindest 720°, verdreht zu werden.

4. Fahrzeugscheinwerfer nach einem der Ansprüche 1 bis 3, **dadurch gekennzeichnet, dass** das Einstellelement (2) drehbar an dem Gehäuse (1) gelagert ist, wobei vorzugsweise das Einstellelement (2) dazu eingerichtet ist, um zumindest 360°, vorzugsweise zumindest 720°, verdreht zu werden.

5. Fahrzeugscheinwerfer nach einem der Ansprüche 1 bis 4, **dadurch gekennzeichnet, dass** das Einstellelement (2) das Gehäuse (1) durchsetzt, wobei zwischen dem Gehäuse (1) und dem Einstellelement (2) ein Dichtungselement (6), insbesondere ein Dichtungsring, angeordnet ist.

6. Fahrzeugscheinwerfer nach einem der Ansprüche 1 bis 5, **dadurch gekennzeichnet, dass** das Einstellelement (2) drehbar an dem Gehäuse (1) gelagert ist und eine koaxial angeordnete Öffnung (2a) zur Aufnahme eines Einstellwerkzeuges aufweist, wobei vorzugsweise die Öffnung (2a) eine sechseckige Form aufweist.

7. Fahrzeugscheinwerfer nach Anspruch 6, **dadurch gekennzeichnet, dass** die Öffnung (2a) eine schlitz- und/oder eine kreuzförmige Einkerbung in dem Einstellelement (2) ausbildet.

8. Fahrzeugscheinwerfer nach einem der vorhergehenden Ansprüche, **dadurch gekennzeichnet, dass** die Ausnehmung eine Erstreckung zwischen 5% und 50%, vorzugsweise zwischen 20% und 30% des Umfangs des Zahnrades (4e') aufweist.

9. Fahrzeugscheinwerfer nach einem der vorhergehenden Ansprüche, **dadurch gekennzeichnet, dass** das federnde Element (4g) und das Halteelement (4b) aus Kunststoff bestehen und das Zahnrad (4e') aus Metall besteht.

10. Fahrzeugscheinwerfer nach einem der vorhergehenden Ansprüche, **dadurch gekennzeichnet, dass** das Gehäuse (1) ein Fahrzeugscheinwerfergehäuse ist.

11. Fahrzeugscheinwerfer nach einem der Ansprüche 1 bis 9, **dadurch gekennzeichnet, dass** das Gehäuse (1) ein von einem Fahrzeugscheinwerfergehäuse gesondertes Gehäuse ist.

## Claims

1. Vehicle headlamp, in particular motor vehicle headlamp, having a housing (1) with an adjusting element (2) accommodated in the housing (1) and a measuring device (4) configured to detect the position and/or orientation of the adjusting element (2), the adjusting element (2) and the measuring device (4) being connected to the housing (1), the measuring device (4) being configured to emit an electrical signal dependent on the position and/or orientation of the adjusting element (2) for driving an adjusting device for adjusting an optically relevant component (3) of a vehicle headlamp, the adjusting element (2) being connected to the measuring device (4) via a transmission gear (4e), wherein the transmission gear (4e) is adapted to transmit a rotational movement of the adjusting element (2) to the measuring device (4), **characterized in that** the adjusting element (2) comprises a toothed section of a shaft (2b), which is in engagement with a gear wheel (4e') of the transmission gear (4e) for rotation of the gear wheel (4e'), wherein the gear wheel (4e') has a recess (4f) which interrupts the otherwise uniform toothing along the circumference of the gear wheel (4e'), wherein the gear wheel (4e') has a resilient element (4g) in the region of the recess (4f), wherein the measuring device (4) has a holding element (4b) for receiving the gear wheel (4e') and the holding element (4b) further comprises a limiting element (4b'), wherein the limiting element (4b') and the elastic element (4g) are arranged in such a way that in a position in which the toothed portion of the shaft (2b) is rotated into the recess (4f) and the gear wheel (4e') thus leaves an engagement position the resilient member (4g) is pressed against the limit member (4b') so that the resilient member (4g) exerts a restoring force on the gear wheel (4e') which presses the gear wheel (4e') back into the engagement position.

2. Vehicle headlamp according to claim 1, **characterized in that** the measuring device (4) comprises an angular position sensor, a potentiometer sensor or a rotary encoder, in particular an incremental sensor or an absolute value sensor.

3. Vehicle headlamp according to one of claim 2, **characterized in that** the measuring device (4) comprises a reference element (4c) which is adapted to be rotated through at least 360°, preferably at least 720°.

4. A vehicle headlamp according to one of claims 1 to 3, **characterized in that** the adjusting element (2) is rotatably mounted on the housing (1), preferably the adjusting element (2) being adapted to be rotated through at least 360°, preferably at least 720°.

5. Vehicle headlamp according to one of claims 1 to 4, **characterized in that** the adjusting element (2) passes through the housing (1), a sealing element (6), in particular a sealing ring, being arranged between the housing (1) and the adjusting element (2).

6. Vehicle headlamp according to one of claims 1 to 5, **characterized in that** the adjusting element (2) is rotatably mounted on the housing (1) and has a coaxially arranged opening (2a) for receiving an adjusting tool, preferably the opening (2a) having a hexagonal shape.

7. Vehicle headlamp according to claim 6, **characterized in that** the opening (2a) forms a slitshaped and/or a cross-shaped notch in the adjustment element (2).

8. Vehicle headlamp according to any of the preceding claims, **characterized in that** the recess has an extension between 5% and 50%, preferably between 20% and 30% of the circumference of the gear wheel (4e').

9. Vehicle headlamp according to one of the preceding claims, **characterized in that** the resilient element (4g) and the retaining element (4b) are made of plastic and the gear wheel (4e') is made of metal.

10. Vehicle headlamp according to any of the foregoing claims, **characterized in that** the housing (1) is a vehicle headlamp housing.

11. Vehicle headlamp according to one of the claims 1 to 9, **characterized in that** the housing (1) is a separate housing from a vehicle headlamp housing.

## Revendications

1. Phare de véhicule, en particulier phare de véhicule automobile, comportant un boîtier (1) avec un élément de réglage (2) logé dans le boîtier (1) et un dispositif de mesure (4) conçu pour détecter la position et/ou l'orientation de l'élément de réglage (2), l'élément de réglage (2) et le dispositif de mesure (4) étant reliés au boîtier (1), le dispositif de mesure (4) étant conçu à cet effet, d'émettre un signal électrique dépendant de la position et/ou de l'orientation de l'élément de réglage (2) pour commander un dispositif de réglage destiné à régler un composant optiquement important (3) d'un phare de véhicule, l'élément de réglage (2) étant relié au dispositif de mesure (4) par l'intermédiaire d'un engrenage multiplicateur (4e), dans lequel l'engrenage de transmission (4e) est adapté pour transmettre un mouvement de rotation de l'élément de réglage (2) au dispositif de mesure (4), **caractérisé en ce que** l'élément de réglage (2) comprend une section dentée d'un arbre (2b), qui est en prise avec une roue dentée (4e') de l'engrenage de transmission (4e) pour la rotation de la roue dentée (4e'), dans lequel la roue dentée (4e') présente un évidement (4f) qui interrompt la denture autrement uniforme le long de la circonférence de la roue dentée (4e'), dans lequel la roue dentée (4e') comporte un élément élastique (4g) dans la région de l'évidement (4f), dans lequel le dispositif de mesure (4) comporte un élément de maintien (4b) pour recevoir la roue dentée (4e') et l'élément de maintien (4b) comporte en outre un élément de limitation (4b'), dans lequel l'élément de limitation (4b') et l'élément élastique (4g) sont disposés de telle manière que, dans une position dans laquelle la partie dentée de l'arbre (2b) est tournée dans l'évidement (4f) et l'engrenage (4e') quitte ainsi une position d'engagement l'élément élastique (4g) est pressé contre l'élément de limite (4b') de sorte que l'élément élastique (4g) exerce une force de rappel sur la roue dentée (4e') qui repousse la roue dentée (4e') en position engagée.

2. Projecteur de véhicule selon la revendication 1, **caractérisé en ce que** le dispositif de mesure (4) comprend un capteur de position angulaire, un capteur à potentiomètre ou un codeur rotatif, en particulier un capteur incrémental ou un capteur de valeur absolue.

3. projecteur de véhicule selon l'une des revendications 2, **caractérisé en ce que** le dispositif de mesure (4) comprend un élément de référence (4c) qui est adapté pour être tourné d'au moins 360°, de préférence d'au moins 720°.

4. Projecteur de véhicule selon l'une des revendications 1 à 3, **caractérisé en ce que** l'élément de réglage (2) est monté de manière à pouvoir tourner sur le boîtier (1), l'élément de réglage (2) pouvant de préférence être tourné d'au moins 360°, de préférence d'au moins 720°.

5. Projecteur de véhicule selon l'une des revendications 1 à 4, **caractérisé en ce que** l'élément de réglage (2) traverse le boîtier (1), un élément d'étanchéité (6), en particulier une bague d'étanchéité, étant disposé entre le boîtier (1) et l'élément de réglage (2).

6. Phare de véhicule selon l'une des revendications 1 à 5, **caractérisé en ce que** l'élément de réglage (2) est monté de manière à pouvoir tourner sur le boîtier (1) et présente une ouverture (2a) disposée coaxialement pour recevoir un outil de réglage, l'ouverture (2a) ayant de préférence une forme hexagonale.

7. Projecteur de véhicule selon la revendication 6, **caractérisé en ce que** l'ouverture (2a) forme une encoche en forme de fente et/ou de croix dans l'élément de réglage (2).

8. Projecteur de véhicule selon l'une des revendications précédentes, **caractérisé en ce que** l'évidement présente une extension comprise entre 5 % et 50 %, de préférence entre 20 % et 30 % de la circonférence de la roue dentée (4e').

9. Projecteur de véhicule selon l'une des revendications précédentes, **caractérisé en ce que** l'élément élastique (4g) et l'élément de retenue (4b) sont en matière plastique et la roue dentée (4e') est en métal.

10. Un projecteur de véhicule selon l'une des revendications précédentes, **caractérisé en ce que** le boîtier (1) est un boîtier de projecteur de véhicule.

11. Projecteur de véhicule selon l'une des revendications 1 à 9, **caractérisé en ce que** le boîtier (1) est un boîtier séparé d'un boîtier de projecteur de véhicule.
